# EUROPÄISCHE PATENTSCHRIFT

(11) **EP 2 918 742 B1**
(45) Veröffentlichungstag und Bekanntmachung des Hinweises auf die Patenterteilung: **14.08.2019**
(21) Anmeldenummer: 15159073.4
(22) Anmeldetag: 13.03.2015
(51) Int. Cl.: E03F 3/04, H02G 9/06, E01C 11/22

(54) **ENTWÄSSERUNGSRINNENELEMENT**
DRAINAGE ELEMENT
ÉLÉMENT DE CANIVEAU D'ÉCOULEMENT DES EAUX

(30) Priorität: 13.03.2014 DE 202014101152 U
(43) Veröffentlichungstag der Anmeldung: 16.09.2015
(73) Patentinhaber: BIRCO GmbH, 76532 Baden-Baden (DE)
(72) Erfinder: Merkel, Christian, 76532 Baden-Baden (DE)
(74) Vertreter: Glück Kritzenberger Patentanwälte PartGmbB

(56) Entgegenhaltungen:
- EP-A2- 2 660 400
- WO-A1-2012/090596
- DE-U1- 29 602 588
- US-A- 4 940 359

## Beschreibung

Die vorliegende Erfindung betrifft ein, in der Regel längliches, Entwässerungsrinnenelement aus Beton. Derartige, in Regel längliche Entwässerungsrinnenelemente werden stirnseitig zur Bildung von längeren Entwässerungsrinnen zusammengesetzt.

Die DE 296 02 588 U1 beschreibt ein Entwässerungsrinnenelement gemäß dem Oberbegriff des Anspruchs 1.

Die DE 10 2011 001 356 A zeigt eine Versickerungsrinne, die durch ein horizontales wasserdurchlässiges Tragelement in zwei Teile unterteilt ist. Auf dem Tragelement ist eine Filtersubstratschüttung angeordnet. Einfließendes Wasser gelangt in den oberen Bereich, wird dort in der Filtersubstratschüttung grob gereinigt und fließt durch das Tragelement in einen darunter angeordneten Versickerungsbereich.

Es ist Aufgabe der vorliegenden Erfindung, ein Entwässerungsrinnenelement zu schaffen, das für vielfältige Aufgaben verwendbar ist, und insbesondere Feststoffe vom Abwaaser trennen kann.

Die Aufgabe wird durch ein Entwässerungsrinnenelement gemäß Anspruch 1 gelöst. Vorteilhafte Weiterbildungen der Erfindung sind Gegenstand der Unteransprüche.

Erfindungsgemäß hat das Entwässerungsrinnenelement ein oberes Rinnenteil und wenigstens ein unter dem oberen Rinnenteil angeordnetes unteres Rinnenteil, wobei die beiden Rinnenteil in einem monolithischen Rinnenkörper oder als separate Betonelemente übereinander angeordnet integriert sind. Die beiden Rinnenteile können für vielfältige Zwecke verwendet werden.

In einer ersten Ausführungsform der Erfindung sind die wenigstens zwei Rinnenteile in einem monolithischen Rinnenkörper angeordnet. Zumindest ein unteres Rinnenteil ist dabei vollständig vom oberen Rinnenteil getrennt, so dass lediglich das obere Rinnenteil zur Entwässerung genutzt wird, und z.B. bei drei Rinnenteilen das unterste für Infrastruktur-Maßnahmen genutzt werden kann, ohne dass darin Wasser eindringt. Die Separierung erfolgt durch einen horizontalen Trennabschnitt des Rinnenkörpers, der sich in dieser Ausführungsform der Erfindung durchgängig zwischen dem ersten Rinnenteil und dem zweiten Rinnenteil erstreckt. Es können im Falle von z.B drei Rinnenteilen somit im untersten Aufnahmeraum des unteren Rinnenteils z.B. Lichtleiterkabel, Stromkabel, Signalkabel, Wasserleitungen, Gasleitungen und Kanalisationsrohre verlegt werden, wobei diese aufgrund der Separierung durch den massiven horizontalen Trennabschnitt vom Sedimentationsbereich des oberen Rinnenteils gegen mechanische Beschädigung als auch gegen Wassereintrag geschützt sind. Dadurch, dass der wenigstens eine untere Rinnenteil im Falle von z.B. drei Rinnenteilen komplett von den oberen Rinnenteilen durch den horizontalen Trennabschnitt separiert ist, dringt in den unteren Rinnenteil kein Wasser von den oberen Rinnenteilen ein, so dass selbst feuchtigkeitsempfindliche Leitungen sicher verlegt werden können.

Vorzugsweise hat der untere Rinnenteil einen axial erstreckenden Aufnahmeraum mit einem vorzugsweise kreisrunden oder rechteckigen Querschnitt, der sehr gut zur Aufnahme von Versorgungsleitungen geeignet ist. Der kreisrunde Querschnitt ermöglicht eine einfache Reinigung des Aufnahmeraums des unteren Rinnenteils.

Die Begriffe "Entwässerungsrinnenelement" und "Rinnenelement" werden synonym verwendet.

Gemäß der Erfindung hat das obere Rinnenteil einen Sedimentationsraum zum Abdsedimentieren von Feststoffen aus einlaufendem Abwasser und der untere Rinnenteil ist zur Ableitung des aus dem Sedimentationsraum austretenden absedimentierten Wassers ausgebildet, hat z.B. einen Wasserlauf. Diese Ausführungsform der Erfindung bietet den Vorteil einer Linienentwässerung mit integrierter Sedimentation und Ableitung des gereinigten Wassers. Die Ableitung des Wassers erfolgt damit örtlich getrennt unter der Sedimentation, was eine effektivere Sedimentation gewährleistet.

Das erfindungsgemäße Entwässerungsrinnenelement besteht somit aus mindestens zwei entweder einstückig miteinander verbundenen oder separaten übereinander angeordneten Rinnenteilen, wobei in dem oberen Rinnenteil der Sedimentationsraum angeordnet ist und im unteren Rinnenteil der Wasserlauf, der an ein Kanalisationsnetz oder an einen Versickerungsbereich anschließbar ist, z.B. über die stirnseitigen Enden oder über Abläufe im Boden des unteren Rinnenteils. Ein besonderer Vorteil der Erfindung liegt auch darin, dass der Ausgang des Rinnenelements oder einer daraus hergestellten Rinne direkt in einen See oder ein fließendes Gewässer eingeleitet werden kann.

Das obere Rinnenteil ist U-förmig und hat zwei Seitenwände und einen oberen Rinnenteilboden, wobei der Sedimentationsraum zwischen den Seitenwänden und dem oberen Rinnenteilboden ausgebildet ist. Auch das untere Rinnenteil ist vorzugsweise rund oder oval ausgebildet und hat zwei Seitenwände und einen unteren Rinnenteilboden, welche einen Wasserlauf umgeben. Es ist weiterhin ein Ablauf von dem oberen Rinnenteil in den unteren Rinnenteil in zumindest jedem zweiten bis fünften Rinnenelement einer Entwässerungsrinne angeordnet. Eine derartige Anordnung ist leicht herstellbar.

Das Entwässerungsrinnenelement gemäß der Erfindung enthält wenigstens einen Ablauf, der als Überlauf mit einer vom oberen Rinnenteilboden beabstandeten Einlauföffnung für die unsedimentierte Ableitung von Starkregenereignissen. Das Ablaufelement kann z.B. als geschlitztes Rohr ausgebildet sein, dessen Schlitz sich bis zum Boden des oberen Rinnenteils erstreckt. Es sorgt dafür, dass Wasser von dem oberen Rinnenteil in den unteren Rinnenteill läuft, wobei es gegebenenfalls gefiltert wird. Da die Einlauföffnung bei der Ausbildung des Ablaufs als Überlauf von dem oberen Rinnenteilboden beabstandet ist, z.B. um 5 bis 30 cm, wird nur der Teil des im oberen Rinnenteil befindlichen Wassers abgeführt, in dem nur noch vergleichsweise wenig Feststoffe im Wasser vorhanden sind, die aufgrund ihres Gewichts auf den oberen Rinnenteilboden absedimentieren. Eine geeignete Höhe der Einlauföffnung des Überlaufs über dem oberen Rinnenteilboden liegt vorzugsweise zwischen 5 und 30 cm, insbesondere zwischen 10 und 20 cm.

Auf diese Weise wird im oberen Rinnenteil eine effektive Sedimentation bewirkt und nur das oben durch die Einlauföffnung abfließende Wasser wird in den unteren Rinnenteil, das heißt in dessen Wasserlauf, geleitet. Das obere Rinnenteil liegt auf dem unteren Rinnenteil auf, wodurch lediglich ein Fundament für das untere Rinnenteil vorgesehen werden muss, da das obere Rinnenteil vollständig von dem unteren Rinnenteil getragen wird. Vorteilhafterweise werden die beiden Rinnenteile, die vorzugsweise als separate Betonkörper ausgebildet sind, miteinander verklebt oder vermörtelt. Die beiden Rinnenteile (oberes und unteres Rinnenteil können jedoch auch als einstückiges, d.h. monolithisches Rinnenelement gefertigt sein.

Als Beton kann auch Faserbeton, bewehrter Beton oder Polymerbeton verwendet werden.

Vorzugsweise durchsetzt der Ablauf den oberen Rinnenteilboden, z.B. einen Durchgang des oberen Rinnenteilbodens, so dass der Ablauf nicht im Bereich der Seitenwände vorgesehen werden muss, was herstellungstechnisch aufwendiger zu realisieren wäre. Der Vorteil dieser Ausfuhrungsform besteht auch darin, dass der axiale Abstand der Abläufe in den Rinnenelementen entsprechend dem Abstand der Durchgänge frei wählbar ist. Es können in einer Rinne sogar nur in den Durchgang jeder zweiten bis fünften Rinne ein Ablauf eingesteckt werden, wobei die anderen Durchgänge mit Verschlusselementen, z.B. aus Kunststoff verschlossen werden.

Der Ablauf ist vorzugsweise abnehmbar in einem Durchgang im oberen Rinnenteilboden gehalten. Zum Reinigen der Rinne kann somit der Ablauf von dem oberen Rinnenteil abgezogen werden, wodurch dann der obere Rinnenteilboden durchgehend ohne dazwischen hochragende Abläufe leicht zugänglich und zu reinigen ist.

In dem Ablauf kann vorzugsweise ein Filterschwamm angeordnet sein, um einen Schmutzeintrag des bereits absedimentierten Wassers in den unteren Rinnenteil weiter zu verringern. Der Ablauf und damit der Filterschwamm sind aufgrund der abnehmbaren Halterung des Ablaufs im Durchgang leicht auszuwechseln.

Vorzugsweise ist in diesem Fall in dem Durchgang des Rinnenteilbodens, welcher zum Beispiel durch eine Durchbohrung des oberen Rinnenteilbodens gebildet ist, ein Verschlusselement angeordnet, das selbstständig in eine den Durchgang verschließende Verschlussstellung vorgespannt ist. Erst mit dem Einsetzen des Ablaufs wird dann das Verschlusselement in eine Öffnungsstellung gedrückt. Vice versa schnappt mit dem Entfernen des Ablaufs das Verschlusselement wieder in die den Durchgang verschließende Verschlussstellung. Auf diese Weise kann nach dem Entfernen der Abläufe der obere Rinnenteilboden einfach gereinigt werden, ohne dass das im oberen Rinnenteil absedimentierte Material durch die Durchgänge in den unteren Rinnenteil läuft und dort den Wasserlauf verschmutzt.

In einer sehr einfachen Ausführungsform ist der Ablauf rohrförmig ausgebildet. Ein derartiges Teil ist einfach herstellbar und in gleicher Weise ist ein kreisrunder Durchgang in einem oberen Rinnenteil aus Beton leicht herstellungstechnisch realisierbar. Der Ablauf kann jedoch beliebige andere Querschnitte als einen kreisrunden aufweisen, so z.B. polygon, elliptisch oder oval.

In diesem Fall kann der untere Rinnenteil ein hohles Längsprofil, z.B. Kunststoffrohr enthalten, das in dem Rinnenkörper als verlorene Schalung verbleibt. Vorzugsweise steht die verlorene Schalung an den Enden des Rinnenelements etwas hervor, so dass es an dem hervorstehenden Teil der verlorenen Schalung eines angrenzenden Rinnenelements anliegt. Auf diese Weise ist zum einen der untere Rinnenteil einfach herstellbar. Zudem wird durch das aneinander Anliegen der verlorenen Schalungen benachbarter Rinnenelemente eine einfache Abdichtung des Aufhahmeraums des unteren Rinnenteils erreicht.

Vorzugsweise ist der Ablauf mit einer Abdeckung versehen, so dass mit Feststoffen angereichertes Wasser nicht direkt in den Ablauf einfließen kann, sondern zuerst in den Sedimentationsraum einfließt und von dort aus so lange ansteigt, bis es die Einlauföffnung des Ablaufs erreicht. Auf diese Weise wird erreicht, dass nur Wasser in den unteren Rinnenteil gelangt, aus welchem die Feststoffe schon weitestgehend absedimentiert sind.

Vorzugsweise weisen die Seitenschenkel des oberen Rinnenteils eine Zarge zur Aufnahme einer Rinnenabdeckung, z.B. eines Abdeckrostes auf. Die Rinnenabdeckung ermöglicht ein Begehen oder Befahren des Entwässerungsrinnenelements und hat gleichzeitig Perforationen oder Durchgänge, durch welche Oberflächenwasser in das obere Rinnenteil einlaufen kann.

Vorzugsweise haben die oberen Enden der Seitenschenkel des unteren Rinnenteils eine Auflagefläche für den oberen Rinnenteilboden, womit das obere Rinnenteil stabil auf dem unteren Rinnenteil gehalten wird. Eine derartige Ausführungsform ist sehr robust und ist in der Lage, auch höhere Kräfte aufzunehmen, wodurch sich hohe Belastungsklassen bei den Rinnen realisieren lassen.

Selbstverständlich betrifft die Erfindung auch ein Entwässerungsrinnenelement mit einer Rinnenabdeckung, die vorzugsweise in einer Zarge an der Oberseite der Seitenwände des oberen Rinnenteils gehalten ist.

Um eine Dichtigkeit der aus mehreren Entwässerungselementen zusammengesetzten Entwässerungsrinne zu gewährleiten, sind die Stirnseiten der Entwässerungselemente vorzugsweise mit wenigstens einem Dichtungselement und/oder einer entsprechenden Ausformung der Stirnseiten der Rinnenelemente gegeneinander abgedichtet
Statt des Begriffes "Entwässerungsrinne" wird in dieser Anmeldung synonym der Begriff "Rinne" verwendet. Das Gleiche trifft zu auf den Begriff "Entwässerungsrinnenelement", der in dieser Anmeldung synonym durch den Begriff "Rinnenelement" repräsentiert wird.

Der zweite Rinnenteil im Falle z.B. zwei untere Rinnenteile vorhanden sind kann somit als separater Versorgungs- und Kabelschacht, als Bypass für die Wasserentsorgung, als Ablauf für den Sedimentationsraum im oberen Rinnenteil oder als separate Nassleitung genutzt werden.

In einer bevorzugten Ausführungsform der Erfindung hat der Rinnenkörper des Rinnenelements einen oberen Rinnenteil und wenigstens zwei untere Rinnenteile, wobei der obere Rinnenteil einen Sedimentationsraum und einen Wasserlauf aufweist. Der darunter befindliche erste untere Rinnenteil hat einen Wasserablaufkanal, der über Abläufe mit dem Sedimentationsraum verbunden ist. Schließlich ist unter dem ersten unteren Rinnenteil ein zweiter unterer Rinnenteil angeordnet, der einen geschlossenen Versorgungskanal für Infrastrukturversorgung aufweist. Dieser Versorgungskanal ist von dem ersten unteren Rinnenteil durch eine horizontale Wand des Rinnenkörpers komplett getrennt, so dass kein Wasser von den darüber befindlichen Rinnenteilen in den Versorgungskanal eindringen kann.

In gleicher Weise umfasst die Erfindung eine Entwässerungsrinne mit mehreren stirnseitig aneinandergesetzten Entwässerungsrinnenelementen der vorstehend beschriebenen Art. In einer derartigen Entwässerungsrinne sind die Entwässerungsrinnenelemente der vorstehend beschriebenen Art stirnseitig aneinandergesetzt, so dass eine Linienentwässerung gebildet wird, bei oder in einem oberen Bereich, d.h. im oberen Rinnenteil die Sedimentation erfolgt, während in ihrem unteren Bereich, d.h. in einem unteren Rinnenteil das durch die Sedimentation vorgereinigte Wasser abgeführt wird, z.B. in Flüsse oder stehende Gewässer. Die Stirnseiten der Rinnen sind vorzugsweise gegeneinander abgedichtet, um ein Versickern von verunreinigtem Wasser zu verhindern. Die Abdichtung erfolgt durch separate Dichtelemente oder entsprechende Ausbildung der stirnseitigen Kanten der Rinnenelemente.

In einer Entwässerungsrinne mit mehreren Rinnenelementen muss ein Ablauf von dem oberen Rinnenteil in den unteren Rinnenteil nicht in jedem Entwässerungsrinnenelement vorgesehen sein, sondern es ist sogar vorzuziehen, dass nur in jedem zweiten bis fünften Rinnenelement ein Ablauf von dem Sedimentationsraum des oberen Rinnenteils in den Wasserabführbereich des unteren Rinnenelements angeordnet ist, wenn die entsprechende Ablaufleistung des Ablaufelements zur Wasserabfuhr für die mehreren Rinnen auch im Fall eines Starkregeneereignisses ausreicht.

Vorzugsweise sind in dem unteren Rinnenteil Halterungen für Versorgungsleitungen angeordnet, so dass im unteren Rinnenteil nicht nur die Ableitung des absedimentierten Wassers erfolgt, sondern alternativ oder zusätzlich auch Versorgungsleitungen für Gas, Wasser, Elektrizität und Informationsleitungen (z.B. Glasfaser oder Kupferkabel) verlegt werden können. Vorzugsweise ist in diesem Fall das obere Rinnenteil abnehmbar auf dem unteren Rinnenteil gehalten, so dass die Versorgungsleitungen leicht zugänglich sind, ohne dass z.B. eine Straße aufgerissen werden muss. In diesem Fall sind Aufschwemmsicherungen vorzugsweise nur an dem unteren Rinnenteil ausgebildet, so dass das vertikale Entnehmen des oberen Rinnenteils nicht erschwert wird. Das Rinnenelement kann auch einteilig ausgebildet sein, in welchem Fall dann im unteren Rinnenteil Leerrohre für die Versorgungsleitungen angeordnet sein sollten.

Vorzugsweise hat der Rinnenkörper an den Seiten Aufschwemmsicherungen, was vor allem deswegen wichtig ist, weil der Hohlraum des unteren Rinnenteil einen Auftrieb des Rinnenelements bewirkt. Vorzugsweise ist die Aufschwemmsicherung durch einen weiter unten liegenden Bereich des Rinnenkörpers gebildet, der eine größere Breite aufweist als ein darüber liegender Bereich des Rinnenkörpers.

Die Erfindung wird nachfolgend anhand der schematischen Zeichnung beispielsweise beschrieben. In dieser zeigen:
Fig. 1 einen vertikalen Querschnitt durch eine erste Ausführungsform einer Entwässerungsrinne mit zwei stirnseitig aneinander gesetzten Entwässerungsrinnenelementen,
Fig. 2 einen Längsschnitt AA der ersten Ausführungsform der Entwässerungsrinne aus Fig. 1,
Fig. 3 einen senkrechten Querschnitt einer zweiten Ausführungsform einer Entwässerungsrinne,
Fig. 4 einen Längsschnitt BB der zweiten Ausführungsform der Entwässerungsrinne aus Fig. 3,
Fig. 5 einen Querschnitt einer dritten Ausführungsform eines Entwässerungsrinnenelements mit im unteren Rinnenteil angeordneten Versorgungsleitungen, wobei der Ablauf nicht dargestellt ist,
Fig. 6 einen Längs und Querschnitt einer nicht unter die Patentansprüche fallenden Ausführungsform eines Entwässerungsrinnenelements mit vollständig voneinander getrennten oberen und unteren Rinnenteil, und
Fig. 7 einen Querschnitt einer vierten Ausführungsform eines Entwässerungsrinnenelements mit drei übereinander angeordneten Rinnenteilen.

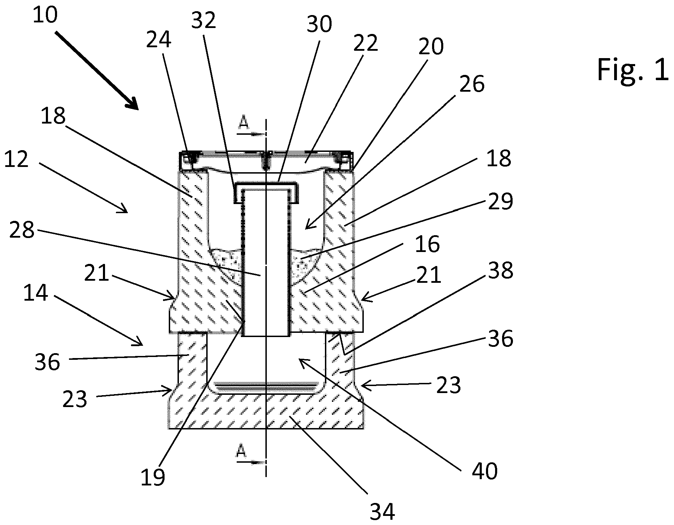

Fig. 1 zeigt ein Entwässerungsrinnenelement 10, das aus einem oberen Rinnenteil 12 und einem unteren Rinnenteil 14 gebildet ist, die als separat hergestellte Betonformkörper ausgebildet sind. Das obere Rinnenteil 12 enthält einen oberen Rinnenteilboden 16 und zwei Seitenwände 18, die an ihrem oberen Ende eine Zarge 20 zur Aufnahme einer Rinnenabdeckung, z.B. eines Abdeckrostes 22 tragen. Der Abdeckrost 22 ist mit Befestigungselementen 24, zum Beispiel mit Bolzen, an dem oberen Rinnenteil 12 befestigt. Zwischen dem oberen Rinnenteilboden 16 und den Seitenschenkeln 18 ist ein Sedimentationsraum 26 gebildet, in welchem sich Schwebstoff und Feststoffe 29 absetzen können, die durch den Abdeckrost 22 von oben in den Sedimentationsraum 26 des oberen Rinnenteils 12 einlaufen. An den Außenseiten ist das obere Rinnenteil in den Abschnitten 21 verbreitert, welche obere Aufschwemmsicherungen bilden. Mittig an dem oberen Rinnenteilboden 16 ist ein rohrförmiger Ablauf 28 vorgesehen, der sich senkrecht erstreckt und den Rinnenteilboden 16 durchsetzt. Der Rinnenteilboden 16 kann auch als horizontaler Trennabschnitt zwischen dem oberen Rinnenteil 12 und dem unteren Rinnenteil 14 bezeichnet werden. An seinem oberen Ende ist der Ablauf 28 durch eine Abdeckung 30 abgedeckt. Zwischen der Abdeckung 30 und dem rohrförmigen Ablauf 28 ist ein Einlaufbereich 32 gebildet, durch welches Wasser, das in dem Sedimentationsraum 26 hochsteigt, durch den Ablauf 28 nach unten in das untere Rinnenteil 14 abfließen kann. Der Ablauf bzw. das Ablaufrohr 28 kann auch seitlich bis zum Boden geschlitzt sein. Das untere Rinnenteil 14 ist ebenfalls als U-Profil ausgebildet und hat einen unteren Rinnenteilboden 34 und zwei Seitenwände 36, die an ihrem oberen Ende eine Auflagefläche 38 für den Rinnenteilboden 16 des oberen Rinnenteils bilden bzw. haben. Das untere Rinnenteil ist im unteren Bereich an den Abschnitten 23 verbreitert, die untere Aufschwemmsicherungen für das untere Rinnenteil 14 bilden. Das untere Rinnenteil 14 hat einen als Wasserlauf 40 ausgebildeten Aufnahmeraum, der von Wasser gespeist wird, das durch den rohrförmigen Ablauf 28 vom oberen Rinnenteil in den unteren Rinnenteil 14 läuft. Derartige rohrförmige Abläufe 28 sind in axialer Richtung der Rinne in definierten Abständen angeordnet, so zum Beispiel alle 30 cm bis 100 cm. So kann zum Beispiel ein Rinnenteilelement, welches eine Normlänge von 1 m hat, einen oder zwei Abläufe 28 dieser Art aufweisen. Es ist auch möglich, eine Entwässerungsrinne zu bilden, bei dem nur jedes zweite, dritte oder vierte Entwässerungselement einen Ablauf aufweist.

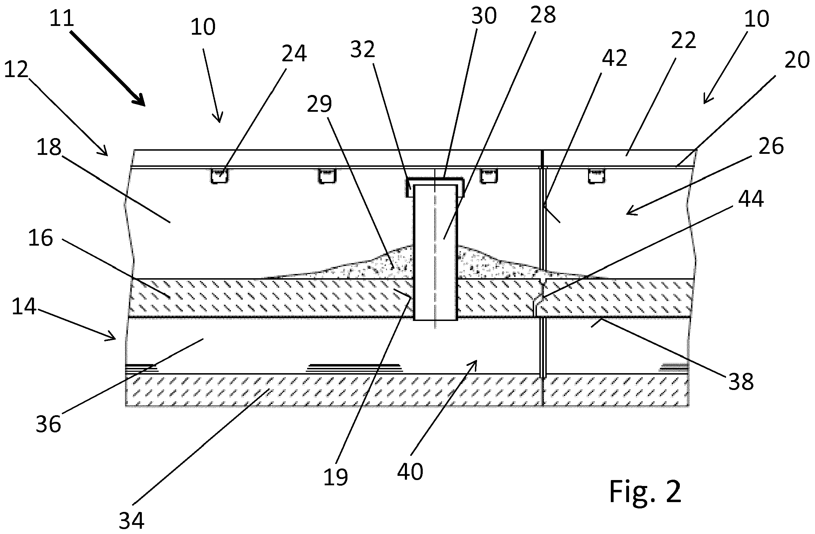

Am stirnseitigen Ende 42 des Entwässerungsrinnenelements 10 hat der obere Rinnenteilboden 16 eine Abkantung 44, die dazu führt, dass einander zugewandte Enden zweier benachbarter Entwässerungsrinnenelemente mit der Abkantung eine Labyrinthdichtung bilden, durch welches Sediment schwerer nach unten in das darunterliegende untere Rinnenteil gelangt. Fig. 2 zeigt zwei stirnseitig aneinandergesetzte Rinnenteilelemente 10, die gegebenenfalls mit weiteren nicht dargestellten Rinnenteilelementen eine Rinne 11 bilden. In den Figuren sind identische oder funktionsgleiche Teile mit den identischen Bezugszeichen versehen.

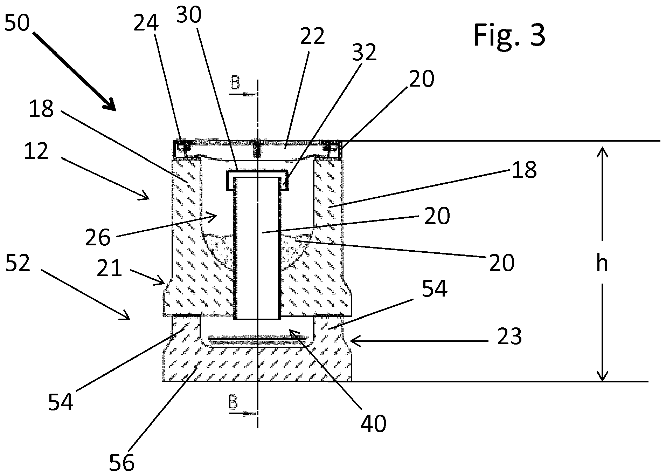

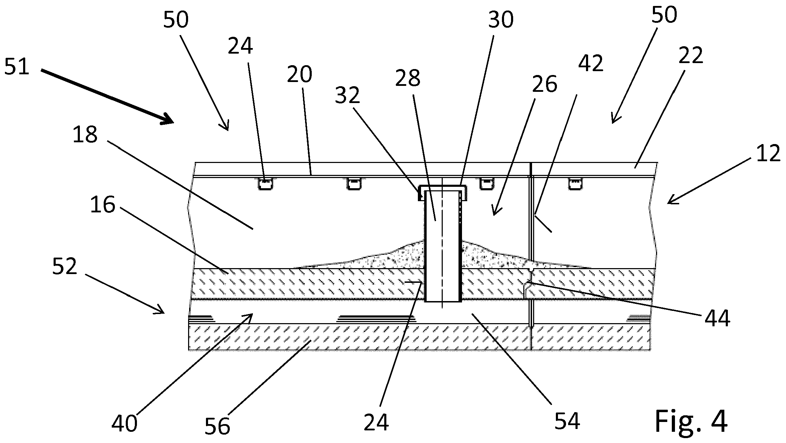

Fig. 3 zeigt eine weitere Ausführungsform einer Entwässerungsrinne mit zwei stirnseitig aneinanderstoßenden Entwässerungsrinnenelementen 50. Bei dieser Ausführungsform sind zu Fig. 1 und 2 identische oder funktionsgleiche Elemente mit den gleichen Bezugszeichen versehen sind. Das untere Rinnenteil 52 unterscheidet sich von dem unteren Rinnenteil 14 der Fig. 1 und 2 dadurch, dass die Seitenwände 54 des unteren Rinnenteils 52 eine geringere Höhe haben, wodurch die Höhe des Wasserlaufs 40 dieser Ausführungsform wesentlich geringer ist als die der Ausführungsform in den Fig. 1 und 2. Damit lässt sich eine wesentlich reduzierte Gesamthöhe h des Entwässerungsrinnenelements 50 bzw. einer daraus gefertigten Rinne realisieren. Fig. 4 zeigt zwei stirnseitig aneinandergesetzte Rinnenteilelemente 50, die eine Rinne 51 bilden.

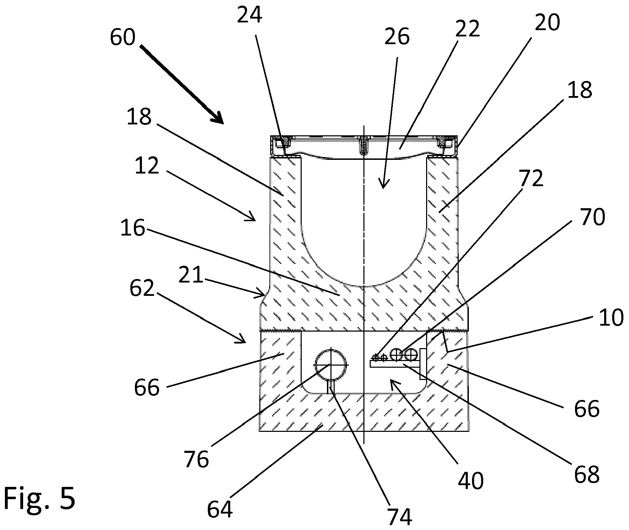

Fig. 5 zeigt eine dritte Ausführungsform eines Entwässerungsrinnenelements 60, bei dem wiederum zu den vorherigen Figuren identische oder funktionsgleiche Teile mit den identischen Bezugszeichen versehen sind. Der Übersichtlichkeit halber ist in dieser Ausführungsform der Ablauf 28 nicht dargestellt, obwohl er in gleicher Weise wie bei den vorherigen Figuren angeordnet und ausgebildet sein kann. In dieser Ausführungsform ist das untere Rinnenteil 62 wiederum als Betonformteil mit einem unteren Rinnenteilboden 64 und Seitenwänden 66 ausgebildet, so dass das untere Rinnenteil relativ exakt einem U-Profil entspricht. An einer Seitenwand 66 ist ein Träger 68 für Versorgungsleitungen 70, 72 montiert, welche Elektroleitungen und Gasleitungen oder Informations- und Übertragungskabel sein können. In gleicher Weise ist an den unteren Rinnenteilboden 64 ein vertikaler Träger 74 montiert, welcher einen Rohrkanal 76, zum Beispiel für eine Wasserzufuhr oder Abwasserabfuhr, trägt. Diese Versorgungsleitungen bzw. Kanäle 70, 72, 76 mit den dazugehörigen Trägern 68, 74 sind somit innerhalb des Wasserlaufs 40 des unteren Rinnenteils angeordnet. In diesem Fall ist das obere Rinnenteil 12 vorzugsweise nicht mit dem unteren Rinnenteil 62 verklebt, so dass das obere Rinnenteil bei Wartungs- oder Verlegearbeiten in den Versorgungsleitungen 70, 72, 76 leicht entfernt werden kann, womit diese Leitungen frei liegen. Dies hat den Vorteil, dass für eine Änderung oder Neuverlegung von Versorgungsleitungen eine Straße nicht aufgerissen werden braucht. In diesem Fall sind vorzugsweise an dem oberen Rinnenteil keine Aufschwemmsicherungen vorhanden.

Die in den Figuren dargestellten Rinnenelemente können auch einstückig, d.h. oberes Rinnenteil und unteres Rinnenteil monolithisch, hergestellt werden.

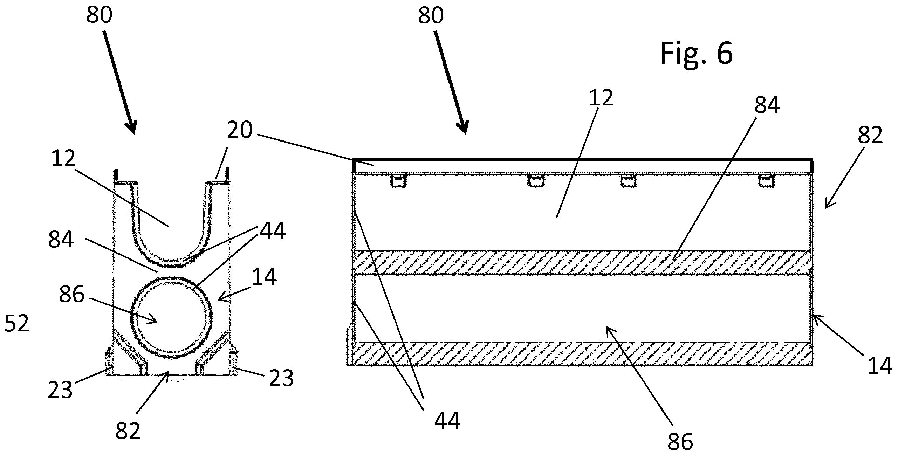

Fig. 6 zeigt eine nicht unter die Patentansprüche fallende Ausführungsform eines Entwässerungsrinnenelements. Das dort gezeigte Entwässerungsrinnenelement 80 enthält einen oberen Rinnenteil 12 und einen unteren Rinnenteil 14, die in einem monolithischen Rinnenkörper 82 ausgebildet sind. Zwischen den beiden Rinnenteilen ist ein horizontaler Trennabschnitt 84 des Rinnenkörpers ausgebildet, dessen Oberseite den Rinnenteilboden des oberen Rinnenteils 12 bildet. Der horizontale Trennabschnitt 84 des Rinnenkörpers 82 ist vollständig geschlossen und separiert damit den oberen Rinnenteil 12 von dem unteren Rinnenteil. Während der obere Rinnenteil einen Wasserlauf auf dem horizontalen Trennabschnitt aufweist, hat der untere Rinnenteil abschnitt einen Aufnahmeraum 86 mit einem kreisrunden Querschnitt. In dem Aufnahmeraum können aufgrund der vollständigen Trennung vom oberen Rinnenteil 12 Versorgungsleitungen verlegt werden, insbesondere welche, die nicht in dauerndem Kontakt mit Wasser kommen sollten, wie z.B. Elektrizitäts und Signalleitungen (z.B. Glasfaser oder Kupferkabel). Es können sogar mechanische Stelldrähte in dem Aufnahmeraum 9'86 verlegt werden, wie sie z.B. beide Bahn für Weichen verwendet werden.

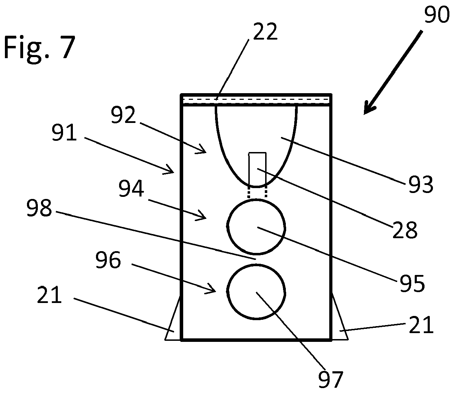

Fig. 7 zeigt eine vierte Ausführungsform eines erfindungsgemäßen Entwässerungsrinnenelements 90 mit einem Rinnenkörper 91, der einen oberen Rinnenteil 92 und wenigstens zwei untere Rinnenteile 94, 96 aufweist. Der obere Rinnenteil 92 weist einen Sedimentationsraum 93 auf. Der darunter befindliche erste untere Rinnenteil 94 hat einen Wasserablaufkanal 95, der über Abläufe 28 mit dem Sedimentationsraum 93 verbunden ist. Unter dem ersten unteren Rinnenteil 94 ist ein zweiter unterer Rinnenteil 96 angeordnet, der einen geschlossenen Versorgungskanal 97 für Infrastrukturversorgung aufweist. Der Versorgungskanal 97 ist von dem ersten unteren Rinnenteil 94 durch eine horizontale Wand 98 des Rinnenkörpers 91 insbesondere vollständig getrennt ist, so dass kein Wasser von den oberen Rinnenteilen 92, 94 eindringen kann.

Die Erfindung ist innerhalb des Schutzbereichs der nachfolgenden Ansprüche in beliebiger Weise variierbar. In den dargestellten Ausführungsbeispielen sind im unteren Bereich an den Seitenwänden 18 der Rinne verbreiterte Abschnitte 21, 23 vorgesehen, die als Aufschwemmsicherung für die Rinne dienen können, da sie durch das umgebende Baumaterial in ihrer montierten Lage gesichert werden.

## Patentansprüche

1. Entwässerungsrinnenelement (10; 50; 60; 80; 90) mit einem Rinnenkörper (82) aus Beton umfassend einen nach oben hin offenen U-förmigen oberen Rinnenteil (12) mit einem Einlauf und einem Wasserlauf und wenigstens einem darunter angeordneten unteren Rinnenteil (14) mit einem Aufnahmeraum (40, 86), der durch einen horizontalen Trennabschnitt (16; 84) des Rinnenkörpers (82) vom oberen Rinnenteil getrennt und von dem Rinnenkörper (82) zumindest in einem axialen Abschnitt des Entwässerungsrinnenelements vollständig umschlossen ist, wobei der horizontale Trennabschnitt (16; 84) den Boden des oberen Rinnenteils bildet, und wobei das Entwässerungsrinnenelement (10; 50; 60; 80; 90) wenigstens einen Ablauf (28) aufweist, der sich von dem oberen Rinnenteil (12) in den unteren Rinnenteil (14) erstreckt, **dadurch gekennzeichnet,**
**dass** der wenigstens eine Ablauf als Überlauf ausgebildet ist und sich von dem Boden des oberen Rinnenteils nach oben erstreckt und eine vom Boden des oberen Rinnenteils beabstandete Einlauföffnung aufweist, dass der obere Rinnenteil (12) einen Sedimentationsraum (26) zum Absedimentieren von Feststoffen aus einlaufendem Abwasser aufweist, und der untere Rinnenteil (14) zur Ableitung des aus dem Sedimentationsraum über den Überlauf austretenden Wassers ausgebildet ist.

2. Entwässerungsrinnenelement (10; 50; 60; 80; 90) nach Anspruch 1, dass in einem Durchgang (19) des horizontalen Trennabschnitt, in dem der Ablauf (28) abnehmbar angeordnet ist, ein Verschlusselement angeordnet ist, dass selbsttätig in eine den Durchgang (19) verschließende Verschlussstellung vorgespannt ist und durch Wechselwirkung mit dem in den Durchgang eingesetzten Ablauf (28) in eine Öffnungsstellung bewegbar ist.

3. Entwässerungsrinnenelement (10; 50; 60; 80; 90) nach einem der Ansprüche 1 bis 2, bei welchem der Ablauf (28) rohrförmig ausgebildet ist.

4. Entwässerungsrinnenelement (10; 50; 60; 80; 90) nach einem der vorhergehenden Ansprüche, bei welchem der Ablauf (28) mit einer Abdeckung (30) versehen ist.

5. Entwässerungsrinnenelement (80) nach einem der vorhergehenden Ansprüche, bei welchem der Aufnahmeraum (86) im unteren Rinnenteil (14) einen kreisrunden Querschnitt aufweist.

6. Entwässerungsrinnenelement (80) nach einem der vorhergehenden Ansprüche, bei welchem der untere Rinnenteil ein hohles Längsprofil, z.B. Kunststoffrohr enthält, das in dem Rinnenkörper als verlorene Schalung verbleibt.

7. Entwässerungsrinnenelement (80) nach Anspruch 6, bei welchem das hohle Längsprofil an den Enden des Rinnenelements etwas hervorsteht, so dass es an dem hervorstehenden Teil der verlorenen Schalung eines angrenzenden Entwässerungsrinnenelements anliegt.

8. Entwässerungsrinnenelement (80) nach einem der vorhergehenden Ansprüche, bei welchem der Rinnenkörper (84) mit dem oberen und wenigstens einem unteren Rinnenteil (12, 14) monolithisch ausgebildet ist.

9. Entwässerungsrinnenelement (10; 50; 60; 80; 90) nach einem der vorhergehenden Ansprüche, bei welchem die Stirnseite (42) des Rinnenelements (12) eine Abkantung (44) aufweist.

10. Entwässerungsrinnenelement (90) nach einem der vorhergehenden Ansprüche, bei welchem der Rinnenkörper (91) einen oberen Rinnenteil (92) und wenigstens zwei untere Rinnenteile (94, 96) aufweist, wobei der obere Rinnenteil einen Sedimentationsraum (93) und einen Wasserlauf aufweist, ein darunter befindlicher erster unterer Rinnenteil (94) einen Wasserablaufkanal (95) aufweist, der über den wenigsten einen Ablauf (28) mit dem Sedimentationsraum (93) verbunden ist, und unter dem ersten unteren Rinnenteil (94) ein zweiter unterer Rinnenteil (96) angeordnet ist, der einen geschlossenen Versorgungskanal (97) für Infrastrukturversorgung aufweist, welcher Versorgungskanal (97) von dem ersten unteren Rinnenteil (94) durch eine horizontale Wand (98) des Rinnenkörpers (91) getrennt ist.

11. Entwässerungsrinne (11; 51) enthaltend mehrere stirnseitig aneinandergesetzte Entwässerungsrinnenelemente (10; 50; 60; 80; 90) nach einem der vorhergehenden Ansprüche.

## Claims

1. Drainage element (10; 50; 60; 80; 90) having a channel body (82) made of concrete comprising a U-shaped upper channel part (12), which is open above and includes an inlet and a water overflow, and at least one lower channel part (14), which is arranged underlying and includes a receiving space (40, 86) which is separated from the upper channel part by a horizontal separating section (16; 84) of the channel body (82) and is completely surrounded by the channel body (82) at least in an axial section of the drainage element, wherein the horizontal separating section (16; 84) forms the bottom of the upper channel part, and wherein the drainage element (10; 50; 60; 80; 90) has at least one outlet (28) which extends from the upper channel part (12) into the lower channel part (14), **characterized in that**
the at least one outlet is designed as an overflow and extends upward from the bottom of the upper channel part and has an inlet opening spaced apart from the bottom of the upper channel part, the upper channel part (12) has a sedimentation space (26) for settling out solids from inflowing wastewater, and the lower channel part (14) is designed to discharge the water exiting from the sedimentation space via the overflow.

2. Drainage element (10; 50; 60; 80; 90) according to claim 1, **characterized in that** a closing element is arranged in a through passage (19) of the horizontal separating section in which the outlet (28), is removably mounted, is pretensioned in a closed position automatically closing the through passage (19), and is movable into an open position by interaction with the outlet (28) inserted into the through passage.

3. Drainage element (10; 50; 60; 80; 90) according to any one of claims 1 to 2, in which the outlet (28) is designed as tubular.

4. Drainage element (10; 50; 60; 80; 90) according to any one of the preceding claims, in which the outlet (28) is provided with a cover (30).

5. Drainage element (80) according to any one of the preceding claims, in which the receiving space (86) in the lower channel part (14) has a circular cross section.

6. Drainage element (80) according to any one of the preceding claims, in which the lower channel part contains a hollow longitudinal profile, e.g. a plastic tube, which remains in the channel body as a permanent framework.

7. Drainage element (80) according to claim 6, in which the hollow longitudinal profile projects somewhat at the ends of the channel element so that it contacts the projecting part of the permanent framework of an adjacent drainage element.

8. Drainage element (80) according to any one of the preceding claims, in which the channel body (84) with the upper and at least one lower channel part (12, 14) is designed as monolithic.

9. Drainage element (10; 50; 60; 80; 90) according to any one of the preceding claims, in which the end face (42) of the channel element (12) has a chamfer (44).

10. Drainage element (90) according to any one of the preceding claims, in which the channel body (91) has an upper channel part (92) and at least two lower channel parts (94, 96), wherein the upper channel part has a sedimentation space (93) and a watercourse, a first lower channel part (94) located beneath this has a water discharge channel (95) which is connected to the sedimentation space (93) via the at least one outlet (28), and a second lower channel part (96), which is arranged under the first lower channel part (94) and has a closed supply channel (97) for infrastructure supply, and said supply channel (97) is separated from the first lower channel part (94) by a horizontal wall (98) of the channel body (91).

11. Drainage channel (11; 51) containing multiple drainage elements (10; 50; 60; 80; 90) according to any one of the preceding claims, arranged adjacent at their end faces.

## Revendications

1. Élément de caniveau de drainage (10 ; 50 ; 60 ; 80 ; 90) ayant un corps de caniveau (82) en béton comprenant une partie supérieure de caniveau (12) en forme de U ouverte vers le haut comportant une entrée et un conduit d'eau et au moins une partie inférieure de caniveau (14) disposée au-dessous de celle-ci et comportant un espace de réception (40, 86) qui est séparé de la partie supérieure de caniveau par une section de séparation horizontale (16 ; 84) du corps de caniveau (82) et est complètement enfermé par le corps de caniveau (82) au moins dans une section axiale de l'élément de caniveau de drainage, la section de séparation horizontale (16 ; 84) formant le fond de la partie supérieure de caniveau et l'élément de caniveau de drainage (10 ; 50 ; 60 ; 80 ; 90) présentant au moins une sortie (28) qui s'étend depuis la partie supérieure de caniveau (12) dans la partie inférieure de caniveau (14),
**caractérisé en ce**
**que** ladite au moins une sortie est réalisée sous la forme d'un trop-plein, s'étend vers le haut à partir du fond de la partie supérieure de caniveau et présente une ouverture d'entrée espacée du fond de la partie supérieure de caniveau, que la partie supérieure de caniveau (12) présente un espace de sédimentation (26) pour la sédimentation des matières solides provenant des eaux usées entrantes et la partie inférieure de caniveau (14) est conçue pour évacuer par le trop-plein l'eau sortant de l'espace de sédimentation.

2. Élément de caniveau de drainage (10 ; 50 ; 60 ; 80 ; 90) selon la revendication 1, caractérisé en ce en ce qu'un élément de fermeture est disposé dans un passage (19) de la section de séparation horizontale dans lequel la sortie (28) est disposée de manière amovible, lequel élément de fermeture est automatiquement précontraint dans une position de fermeture fermant le passage (19) et peut être déplacé dans une position d'ouverture par interaction avec la sortie (28) insérée dans le passage.

3. Élément de caniveau de drainage (10 ; 50 ; 60 ; 80 ; 90) selon l'une des revendications 1 à 2, dans lequel la sortie (28) est réalisée en forme de tube.

4. Élément de caniveau de drainage (10 ; 50 ; 60 ; 80 ; 90) selon l'une des revendications précédentes, dans lequel la sortie (28) est pourvue d'un couvercle (30).

5. Élément de caniveau de drainage (80) selon l'une des revendications précédentes, dans lequel l'espace de réception (86) dans la partie inférieure de caniveau (14) présente une section transversale circulaire.

6. Élément de caniveau de drainage (80) selon l'une des revendications précédentes, dans lequel la partie inférieure de caniveau contient un profilé longitudinal creux, par exemple un tube en matière plastique, qui reste dans le corps du caniveau en tant que coffrage perdu.

7. Élément de caniveau de drainage (80) selon la revendication 6, dans lequel le profilé longitudinal creux fait légèrement saillie aux extrémités de l'élément de caniveau de manière à venir en appui contre la partie saillante du coffrage perdu d'un élément de caniveau de drainage adjacent.

8. Élément de caniveau de drainage (80) selon l'une des revendications précédentes, dans lequel le corps de caniveau (84) avec la partie supérieure et au moins une partie inférieure de caniveau (12, 14) est réalisé monolithique.

9. Élément de caniveau de drainage (10 ; 50 ; 60 ; 80 ; 90) selon l'une des revendications précédentes, dans lequel la face frontale (42) de l'élément de caniveau (12) présente un chanfrein (44).

10. Élément de caniveau de drainage (90) selon l'une des revendications précédentes, dans lequel le corps de caniveau (91) présente une partie supérieure de caniveau (92) et au moins deux parties inférieures de caniveau (94, 96), la partie supérieure de caniveau présentant un espace de sédimentation (93) et un conduit d'eau, une première partie inférieure de caniveau (94) située au-dessous présentant un canal d'évacuation d'eau (95) qui est relié à l'espace de sédimentation (93) par ladite au moins une sortie (28), et une deuxième partie inférieure de caniveau (96), qui présente un canal d'alimentation fermé (97) pour l'alimentation d'infrastructures, étant disposée au-dessous de la première partie inférieure de caniveau (94), lequel canal d'alimentation (97) est séparé de la première partie inférieure de caniveau (94) par une paroi horizontale (98) du corps du caniveau (91).

11. Caniveau de drainage (11 ; 51) comportant plusieurs éléments de caniveau de drainage (10 ; 50 ; 60 ; 80 ; 90) selon l'une des revendications précédentes qui sont juxtaposés par leurs faces frontales.
